## Europäisches Patentamt

## European Patent Office

## Office européen des brevets

(19)

(11) Veröffentlichungsnummer: **0 251 306 B1**

# EUROPÄISCHE PATENTSCHRIFT

(45) Veröffentlichungstag der Patentschrift: **21.10.92**

(21) Anmeldenummer: **87109432.2**

(22) Anmeldetag: **01.07.87**

(51) Int. Cl.5: **B01D 43/00**, G01N 27/26, B01D 57/02, G01N 30/90

(54) **Verfahren und Vorrichtung zur Herstellung eines regelbaren und reproduzierbaren Temperaturgradienten sowie seine Verwendung.**

(30) Priorität: **04.07.86 DE 3622591**

(43) Veröffentlichungstag der Anmeldung:
**07.01.88 Patentblatt 88/01**

(45) Bekanntmachung des Hinweises auf die
Patenterteilung:
**21.10.92 Patentblatt 92/43**

(84) Benannte Vertragsstaaten:
**BE CH FR GB LI LU NL SE**

(56) Entgegenhaltungen:
DE-A- 2 508 839
DE-C- 3 512 457
US-A- 2 888 392

JOURNAL OF CHROMATOGRAPHY, Band 73, Nr. 1, 8. November 1972, Seiten 298-300, Elsevier, Amsterdam, NL; E. BLASIUS et al.: "Hochspannungspapierionophoretische Trennung gemischter Cyanothiocyanatochromate(III) im Temperaturgradienten"

ANALYTICAL CHEMISTRY, Band 53, Nr. 11, September 1981, Seiten 1170-1178, Easton, Pennsylvania, US; J.C. GIDDINGS: "Field flow fractionation"

(73) Patentinhaber: **DIAGEN Institut für molekular-biologische Diagnostik GmbH**
**Max-Volmer-Str. 4**
**W-4010 Hilden(DE)**

(72) Erfinder: **Rosenbaum, Volker, Dipl.-Phys.**
**Rosenhof 2**
**W-4005 Meerbusch 2(DE)**
Erfinder: **Riesner, Detlev, Prof.-Dr.**
**Echenwand 15**
**W-4000 Düsseldorf 12(DE)**

(74) Vertreter: **Werner, Hans-Karsten, Dr. et al**
**Deichmannhaus am Hauptbahnhof**
**W-5000 Köln 1(DE)**

EP 0 251 306 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung ist ein Verfahren zur Herstellung eines regelbaren und reproduzierbaren Temperaturgradienten in einem flächigen Trennmedium für die Auftrennung von Stoffgemischen, wobei das flächige Trennmedium auf einer wärmeleitenden Platte angeordnet ist. Weiterhin betrifft die Erfindung eine Vorrichtung zur Herstellung eines solchen Temperaturgradienten sowie ihre Verwendung zur Auftrennung von Stoffgemischen, in denen mindestens eine Komponente im Temperaturbereich des Temperaturgradienten eine thermische Umwandlung erfährt.

Es ist bekannt, daß eine Reihe von höhermolekularen Naturstoffen bei steigenden Temperaturen Umwandlungen bzw. irreversible Veränderungen erfahren und daß diese Veränderungen auch analytisch ausgewertet werden können. D.R. Thatcher und B. Hodson haben in The Biochemical Journal (1981), 197, S. 105-109 die Denaturierung von Proteinen und Nukleinsäuren unter Anwendung eines thermischen Gradienten bei der Elektrophorese untersucht und dabei festgestellt, daß hierbei thermisch verursachte Veränderungen sichtbar gemacht werden können. Zur Erzeugung des thermischen Gradienten haben sie ein Gerät konstruiert, welches von beiden Seiten an eine vertikale Polyacrylamid-Gelplatte gelegt werden konnte, wobei thermostatisch kontrolliertes Wasser verschiedener Temperaturen durch die beiden Enden der Aluminiumplatten geleitet wurde. Die beiden Platten waren miteinander in Serie geschaltet, wobei man annahm, daß sich hierbei ein identischer thermischer Gradient ausgebildet hat.

Diese Vorrichtung ist nicht nur konstruktiv kompliziert und schwierig handhabbar, sonder weist auch den prinzipiellen Fehler auf, daß sich hiermit kein regelbarer und reproduzierbarer Temperaturgradient herstellen läßt. Allein dadurch, daß der Strom des Wasserbades durch die in Serie geschalteten Platten geleitet wurde, hat sich ein unerwünschter und störender Temperaturgradient ausgebildet zwischen Zu- und Ableitung des jeweiligen Wasserbades. Dies wiederum führt zu verschiedenen Temperaturen und nicht-parallelen Temperaturgradienten in den beiden Platten. Dies wiederum führt dazu, daß die Gelelektrophoreseplatte auf der Vorder- und Rückseite verschiedene Temperaturen aufwies.

Die vorliegende Erfindung hat sich zunächst die Aufgabe gestellt, einen regelbaren und reproduzierbaren Temperaturgradienten herzustellen in einer vorgegebenen Richtung von wärmeleitenden Platten für die Auftrennung von Stoffgemischen in flächigen Trennmedien. Dabei sollte dies mit möglichst geringem konstruktiven und apparativen Aufwand erfolgen und dennoch gewährleisten, daß möglichst wenig Störungen auftreten.

Diese Aufgabe konnte jetzt überraschend einfach dadurch gelöst werden, daß man mit nur einer einzigen wärmeleitende Platte (1) arbeitet, die von der wärmeleitenden Platte (1) abgewendete Seite des Trennmediums mit einer wärmeisolierenden Abdeckung (10) versehen ist, wobei eine Kante der Platte (1) mittels einer oder mehrerer regelbarer Heizvorrichtungen (4) erwärmt und die gegenüberliegende Kante der Platte (1) mittels einer oder mehrerer regelbarer Kühlvorrichtungen (5) gekühlt wird.

Untersuchungen an rechteckigen Platten mit derartigen Heiz- und Kühlvorrichtungen haben gezeigt, daß auf diese Weise in der Platte ein praktisch linearer Temperaturgradient erzeugt werden kann und dieser Temperaturgradient von der Platte auf die angrenzenden flächigen Trennmedien übertragen wird. Es hat sich weiterhin gezeigt, daß bei wärmeisolierender Abdeckung des flächigen Trennmediums auf der Seite, die der Platte abgewandt ist, sich der gleiche Temperaturgradient durch die gesamte Schicht hindurch ausbildet. Die Temperatur auf den beiden Seiten des Trennmediums ist somit nahezu identisch. Es kann daher nicht zu den Störungen kommen, die durch verschiedene Aufheizung der beiden Seiten des Trennmediums durch zwei Platten zu beobachten sind.

Besonders einfach kann sowohl die Erwärmung der einen Kante der Platte als auch die Kühlung der gegenüberliegenden Kante mit Hilfe von thermostatisierten Flüssigkeitsbädern erfolgen. Prinzipiell kann aber auch die Heizung der einen Kante mit Hilfe einer elektrischen Heizung erfolgen, wobei sowohl Heizdrähte als auch Peltier-Elemente in Frage kommen.

Um bei Verwendung von thermostatisierten Flüssigkeitsbädern zu gewährleisten, daß der Energiefluß der Heizvorrichtung einerseits und der Kühlvorrichtung andererseits größer ist als der Energiefluß durch die Platte, genügt es nicht, an den Plattenenden Bohrungen anzubringen, welche von dem Flüssigkeitsbad durchströmt werden. Es werden vielmehr größerdimensionierte Metallblöcke durchbohrt und vollflächig mit den Kanten der Platte verbunden. Vorzugsweise werden einfach oder doppelt durchbohrte Metallblöcke verwendet, die eine deutlich breitere Außenkante aufweisen als die Dicke der wärmeleitenden Platte.

Bei einfach durchbohrten Metallblöcken bildet sich durch den Energiefluß in die Platte ein gewisser Temperaturgradient zwischen Zu- und Ablauf aus. Dieser Temperaturgradient wird dann als relativ geringfügiger Fehler des erfindungsgemäß herzustellenden Temperaturgradienten auf der Platte an diese weitergegeben. Um auch diese Störungen des Temperaturgradienten in der Platte zu vermeiden, verwendet man am einfachsten doppelt durchbohrte Metallblöcke, durch die das jeweilige Flüssigkeitsbad nacheinander in beiden Richtungen durchgepumpt wird. Der Temperaturgradient zwischen eintretendem und austretendem Flüssigkeitsbad wird dadurch geringer und kompensiert sich innerhalb des Metallblocks. Prinzipiell ist es auch möglich, diesen Fehler etwas zu kompensieren, indem man bei einfach durchbohrten Blöcken eine den Temperaturgradienten entsprechende Winkelabweichung von der parallelen Anordnung wählt und so die geringere Temperaturdifferenz zwischen Ausflüssen durch einen geringeren Abstand ausgleicht, was dann zum gleichen Gradienten führt. Wesentlich störender als ein nicht idealer Gradient sind die Abweichungen der Temperatur auf der Ober- und Unterseite von flächigen Trennmedien bei der Verwendung von zwei Platten, deren Temperaturgradient nicht völlig übereinstimmt, so wie dies im Stand der Technik der Fall war.

Ein weiterer Vorteil des erfindungsgemäßen Verfahrens ist, daß es möglich ist, nicht nur wie im Stand der Technik einen Temperaturgradienten senkrecht zur Laufrichtung, sondern auch parallel zur Laufrichtung herzustellen. Hierdurch ist es möglich, gereinigte, chromatographisch einheitlich erscheinende Fraktionen zu untersuchen.

Es wurde bereits in einigen Fällen festgestellt, daß es sich dabei um Substanzgemische handelte, die bei nochmaliger Auftrennung unter Einwirkung eines parallelen Temperaturgradienten aufgetrennt werden konnten. Dies ist darauf zurückzuführen, daß die einzelnen Komponenten des einheitlich erscheinenden Gemisches sich thermisch verschieden verhalten und daher beim Durchwandern des flächigen Trennmediums an verschiedenen Stellen umgewandelt werden und daher ihre Wanderungsgeschwindigkeit verändern. Bei Anwendung eines parallelen Temperaturgradienten ist es weiterhin möglich, gleichzeitig mehrere Proben zu untersuchen.

Bei Anwendung des erfindungsgemäßen Verfahrens zusammen mit Gelplatten für die Elektrophorese ist es beispielsweise möglich, Viroide, Satelliten-Ribonukleinsäuren von Viren und Viren mit doppelsträngiger RNA nachzuweisen und zu unterscheiden. Weiterhin ist es möglich, Protein-Nukleinsäure-Komplexe sowie Mutationen zu analysieren, da sich auch diese in sehr spezieller Weise thermisch unterscheiden lassen. Einige dieser Trennprobleme konnten sich bisher nur mit Hilfe der sehr schwer reproduzierbaren und äußerst schwierig herstellbaren Gradientenplatten für Gelelektrophorese lösen lassen. Bekannt geworden sind insbesondere derartige Gradientenplatten mit einem Harnstoffgradienten oder einem Gradienten eines Inhibitors (vgl. L.S. Lerman et al., Ann. Rev. Biophys. Bioeng., 1984. 13, S. 399-423).

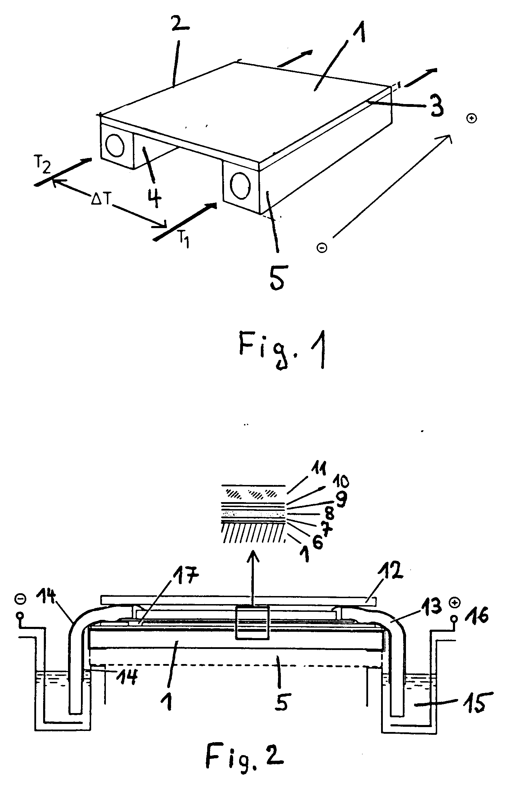

Eine besonders einfache und bevorzugte Ausführungsform der erfindungsgemäßen Vorrichtung ist in der anliegenden Figur 1 dargestellt, welche mit ihren Dimensionen geeignet ist, in einem handelsüblichen Gelelektrophorese-Gerät eingesetzt zu werden, namlich dem LKB 2117 Multiphor II.

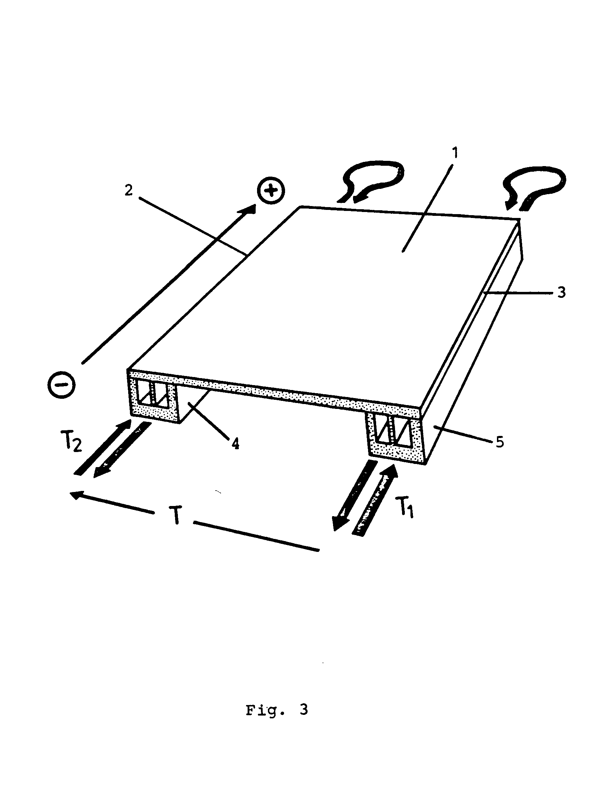

Figur 3 zeigt eine besonders bevorzugte Ausführungsform, welche doppelt durchbohrte Metallblöcke aufweist.

In diesen Figuren bedeutet

1: die wärmeleitende Platte,

2: eine Kante und

3: die gegenüberliegende Kante,

4: eine regelbare Heizvorrichtung und

5: eine regelbare Kühlvorrichtung.

In der anliegenden Figur 2 ist schematisch der Aufbau einer Temperaturgradienten-Gelelektrophorese dargestellt.

In dieser Figur bedeutet

1: eine Kupferplatte,

5: einen Kühlkanal,

6: eine Polytetrafluorethylen-Folie zur elektrischen Isolation,

7: eine das Gel tragende Folie,

8: das Gel,

9: einen Flüssigkeitsfilm zwischen Gel und Abdeckfolie,

10: ein Abdeckfolie,

11: eine auf der Abdeckfolie liegende Glasplatte,

12: eine Glasplatte zum Anpressen der Elektrodenkontakttücher,

13: Elektrodenkontakttücher,

14: Polyethylenfolie um die Elektrodenkontakttücher,

15: Elektrodenpufferbecken

16: eine Elektrode und

17: eine Geltasche.

Zur Durchführung der Temperaturgradienten-Gelelektrophorese wird das Gel vorzugsweise horizontal auf die Thermostatisierplatte gemäß Figur 1 gelegt. Das elektrische Feld im Gel wird über zwei Filterpapiere oder Schwammtücher hergestellt, die in puffergefüllte Elektrodenkammern führen. Anstelle der für horizontale Elektrophoresen handelsüblichen Filterpapiere haben sich auch in destilliertem Wasser ausgekochte Haushaltsschwammtücher gut bewährt, da sie eine größere Saugfähigkeit und nach dem Autoklavieren geringere mikrobiologische Verunreinigungen zeigen.

Die Thermostatisierplatte besteht beispielsweise aus zwei quaderförmigen Kupferblöcken mit quadratischem Querschnitt (210 mm x 30 mm x 30 mm) und einer zentralen zylindrischen Bohrung von 15 mm Durchmesser. Sie werden an den gegenüberliegenden Seiten einer Stirnfläche einer 210 mm x 190 mm x 5 mm großen Kupferplatte angelötet. An die Enden der zylindrischen Bohrung werden Messingoliven angebracht, an die die Zu- und Abführungen zweier Wasserthermostaten angeschlossen werden. Die untere Grenze des Temperaturgradienten ($T_1$) wird durch einen kühlbaren Julabo F20-HC Thermostaten und die obere Grenze ($T_2$) durch einen Haake F3 Thermostaten hergestellt. Nach Anschluß der Thermostaten an die Thermostatisierplatte stellt sich innerhalb von wenigen Minuten ein konstanter Temperaturgradient ein. Der Temperaturgradient zwischen Einlaß und Auslaß der Kupferblöcke betrug weniger als 0,5°C. Die mit der Apparatur maximal einstellbare Temperaturdifferenz betrug 70°C. Messungen der Temperatur oberhalb und unterhalb des Gels ergaben maximale Abweichungen von 1°C. Die Elektrophorese wurde zunächst bei $T_1 = T_2 = 10°C$ und einer Spannung von 100 V begonnen und wieder gestoppt, nachdem an der zurückgelegten Laufstrecke abgeschätzt werden konnte, daß die zu untersuchende Probe vollständig in die Gelmatrix eingedrungen war. Es wurde dann die Spannung abgeschaltet, das Gel einschließlich der Auftragstasche mit Elektrodenpuffer überschichtet und mit der hydrophilen Seite einer Gelbondfolie luftblasenfrei abgedeckt. Diese Maßnahme und das Überziehen der in die puffergefüllten Elektrodengefäße führenden Schwammtücher mit handelsüblicher Haushaltsfolie hat sich als wirksamer Schutz gegen Austrocknung erwiesen. Auf die Abdeckfolie wurden zur thermischen Isolation des Gels noch zwei 5 mm dicke Glasplatten gelegt, durch die man die Bewegung der Farbstoffindikatoren im Gel verfolgen kann. Dann wird der Temperaturgradient erzeugt, indem die Heizung und Kühlung eingestellt werden. In weniger als 5 Minuten hat sich auf der Thermostatisierplatte und im Gel ein linearer Gradient eingestellt. Um eine vollständige Gleichgewichtseinstellung der Konformation der zu untersuchenden Proben zu gewährleisten, wurde vorsichtshalber weitere 10 Minuten equilibriert. Diese Zeitdauer der Equilibrierung ist ein Kompromiß zwischen möglichst vollständiger Equilibrierung der zu untersuchenden Probe und einer möglichst geringen Diffusion der Probe in der Gelmatrix. Danach wird in einem dritten Schritt die Elektrophorese eingeschaltet bei einer Spannung von 300 V. Abgeschaltet wird, wenn im Indikator zu erkennen ist, daß die Probe nahezu am anderen Ende der Gelplatte angelangt ist.

Das Verfahren wurde inzwischen erfolgreich angewendet für den Nachweis und die Unterscheidung von Viroiden, die Diagnose von Viren, die doppelsträngige oder zirkuläre Nukleinsäure enthalten, sowie den Nachweis und die Charakterisierung verschiedener Stämme, beispielsweise vom Rotavirus.

Weiterhin war es möglich, die symptomregulierenden Satelliten-RNAs am Beispiel des Gurkenmosaikvirus und des Erdnußstauchevirus experimentell zu belegen und eindeutig zwischen symptomverstärkenden und symptomabschwächenden Satelliten-RNAs zu unterscheiden. Schließlich ist es gelungen, Protein-Nukleinsäure-Komplexe zu analysieren und in einem Beispiel experimentell zu belegen, daß durch eine Mutation in einer regulatorischen Sequenz eine einfach zu analysierende Fehlfunktion feststellbar war. Die Methode ist daher auch geeignet, Mutationen in Proteinen zu analysieren. Am Beispiel des Kartoffelspindelknollensucht-Viroids (potato spindle tuber viroid) konnten verschiedene Stämme, die sich nur in 1 von 359 Basen unterscheiden und zu unterschiedlich starken Krankheitssymptomen führen, getrennt und quantitativ analysiert werden. Eine solche Analyse ist nicht auf Viroide beschränkt, sondern kann allgemein zur Analyse von Mutationen, sogar von Punktmutationen in Nukleinsäuren, angewendet werden.

**Patentansprüche**

1. Verfahren zur Herstellung eines regelbaren und reproduzierbaren Temperaturgradienten in einem flächigen Trennmedium für die Auftrennung von Stoffgemischen, wobei das flächige Trennmedium auf einer wärmeleitenden Platte angeordnet ist, dadurch gekennzeichnet, daß eine einzige wärmeleitende Platte (1) verwendet wird und die von der wärmeleitenden Platte (1) abgewendete Seite des Trennmediums mit einer wärmeisolierenden Abdeckung (10) versehen ist, wobei eine Kante der Platte (1) mittels einer oder mehrerer regelbarer Heizvorrichtungen (4) erwärmt und die gegenüberliegende Kante der Platte (1) mittels einer oder mehrerer regelbarer Kühlvorrichtungen (5) gekühlt wird.

2. Verfahren gemäß Anspruch 1, dadurch gekennzeichent, daß sowohl die Erwärmung der einen Kante als auch die Kühlung der gegenüberliegenden Kante mit Hilfe von thermostatisierten Flüssigkeitsbädern erfolgt.

3. Verfahren gemäß Ansprüchen 1 oder 2, dadurch gekennzeichnet, daß die Erwärmung der einen Kante mit Hilfe einer elektrischen Heizung erfolgt.

4. Verfahren gemäß einem der Ansprüche 1 bis 3, dadurch gekennzeichnet, daß als flächiges Trennmedium für Stoffgemische Gelplatten für die Elektrophorese verwendet werden.

5. Verfahren gemäß einem der Ansprüche 1 bis 3, dadurch gekennzeichnet, daß als flächiges Trennmedium für Stoffgemische Chromatographieplatten verwendet werden.

6. Verfahren gemäß einem der Ansprüche 1 bis 5, dadurch gekennzeichnet, daß es mit horizontal angebrachtem flächigen Trennmedium durchgeführt wird.

7. Vorrichtung zur Herstellung eines regelbaren und reproduzierbaren Temperaturgradienten in einem flächigen Trennmedium für die Auftrennung von Stoffgemischen, wobei das flächige Trennmedium auf einer wärmeleitenden Platte angeordnet ist, dadurch gekennzeichnet, daß die Vorrichtung eine einzige wärmeleitenden Platte (1), eine wärmeisolierende Abdeckung (10) auf der von der wärmeleitenden Platte (1) abgewandten Seite des flächigen Trennmediums (8) eine oder mehrere regelbare Heizvorrichtungen (4) an der einen Kante (2) und eine oder mehrere regelbare Kühlvorrichtungen (5) an der gegenüberliegenden Kante (3) der wärmeleitenden Platte (1) aufweist.

8. Vorrichtung gemäß Anspruch 7, dadurch gekennzeichnet, daß sowohl die Heizvorrichtung (4) als auch die Kühlvorrichtung (5) jeweils mit entsprechend temperierten Flüssigkeitsbädern thermostatisiert werden.

9. Vorrichtung gemäß Ansprüchen 7 oder 8, gekennzeichnet durch eine Heizvorrichtung (4) mit elektrischem Heizdraht oder Peltier-Elementen.

10. Vorrichtung nach einem der Ansprüche 7 bis 9, dadurch gekennzeichnet, daß die Heizvorrichtungen (4) and der Kante (2) und die Kühlvorrichtungen (5) an der Kante (3) doppelt durchbohrte Metallblöcke aufweisen.

11. Verwendung einer Vorrichtung gemäß einem der Ansprüche 7 bis 10 zur Auftrennung von Stoffgemischen, in denen mindestens eine Komponente im Temperaturbereich des Temperaturgradienten eine thermische Umwandlung erfährt.

12. Verwendung einer Vorrichtung gemäß Anspruch 11 zum Nachweis und zur Unterscheidung von Viroiden, viralen Nukleinsäuren, Satelliten-RNAs, zur Analyse von Mutationen in Nukleinsäuren, zur Analyse von Mutationen in Proteinen und zur Analyse von Protein-Nukleinsäure-Komplexen.

**Claims**

1. A method for producing a controllable and reproducible temperature gradient in a two-dimensional separating medium for the separation of mixtures of substances, wherein the two-dimensional separating medium is located on a heat-conducting plate, characterized in that one single heat-conducting plate (1) is employed and the surface turned away from the heat-conducting plate (1) of the separating medium has been provided with a heat-insulating cover (10), wherein one edge of the plate is heated by means of one or more controllable heating devices (4) and the opposite edge of the plate (1) is cooled by means of one or more controllable cooling devices (5).

2. The method according to claim 1, characterized in that heating one edge of the plate as well as cooling the opposite edge of the plate are effected by means of thermostatized liquid baths.

3. The method according to claims 1 or 2, characterized in that heating one edge of the plate is effected by means of an electric heating.

4. The method according to anyone of claims 1 to 3, characterized in that gel plates for electrophoresis are used as the two-dimensional separating medium for the mixtures of substances.

5. The method according to anyone of claims 1 to 3, characterized in that chromatography plates are used as the two-dimensional separating medium for the mixtures of substances.

6. The method according to anyone of claims 1 to 5, characterized in that it is carried out by using a two-dimensional separating medium which has been horizontally arranged.

7. A device for producing a controllable and reproducible temperature gradient in a two-dimensional separating medium for the separation of mixtures of substances, wherein the two-dimensional separating medium is located on a heat-conducting plate, characterized in that the device comprises one single heat-conducting plate (1), a heat-insulating cover (10) on the surface turned away from the heat-conducting plate (1) of the two-dimensional separating medium (8), one or more controllable heating devices (4) at the one edge (2) and one or more controllable cooling devices (5) at the opposite edge (3) of the heat-conducting plate (1).

8. The device according to claim 7, characterized in that the heating device (4) as well as the cooling device (5) are thermostated with liquid baths maintained at the respective appropriate temperatures.

9. The device according to claims 7 or 8, characterized by a heating device comprising an electric heating wire or Peltier elements.

10. The device according to anyone of claims 7 to 9, characterized in that both the heating devices (4) at the edge (2) and the cooling devices (5) at the edge (3) comprise metal blocks, each of which blocks having two through hole bores.

11. Use of a device according to anyone of claims 7 to 10 for the separation of substance mixtures wherein at least one component undergoes a thermal conversion within the temperature range of the temperature gradient.

12. Use according to claim 11 of a device for detecting and distinguishing viroids, viral nucleic acids, satellite RNA's, for analyzing mutations in nucleic acids, for analyzing mutations in proteins, and for analyzing protein-nucleic acid complexes.

## Revendications

1. Procédé d'obtention d'un gradient de température réglable et reproductible, dans un milieu de séparation disposé à plat, pour la séparation de mélanges de substances, dans lequel le milieu de séparation est disposé à plat sur une plaque conductrice de chaleur, caractérisé en ce qu'on utilise une seule plaque conductrice de chaleur (1), et la face du milieu de séparation opposée à la plaque conductrice de chaleur (1) est pourvue d'un revêtement calorifuge (10), un des bords de la plaque (1) étant chauffé au moyen d'un ou plusieurs dispositifs de chauffage (4) réglables, et le bord opposé de la plaque (1) étant refroidi au moyen d'un ou plusieurs dispositifs de refroidissement (5) réglables.

2. Procédé selon la revendication 1, caractérisé en ce qu'on effectue le chauffage d'un des bords ainsi que le refroidissement du bord opposé au moyen de bains de liquides réglés par thermostat.

3. Procédé selon la revendication 1 ou 2, caractérisé en ce qu'on effectue le chauffage d'un des bords au moyen d'un chauffage électrique.

4. Procédé selon une des revendications 1 à 3, caractérisé en ce qu'on utilise, comme milieu de séparation disposé à plat, pour des mélanges de substances, des plaques de gel pour électrophorèse.

5. Procédé selon une des revendications 1 à 3, caractérisé en ce qu'on utilise, comme milieu de séparation disposé à plat, pour des mélanges de substances, des plaques de chromatographie.

6. Procédé selon une des revendications 1 à 5, caractérisé en ce qu'on le met en oeuvre avec un milieu de séparation disposé à plat appliqué horizontalement.

7. Dispositif pour la préparation d'un gradient de température réglable et reproductible dans un milieu de séparation disposé à plat, pour la séparation de mélanges de substances, dans lequel le milieu de séparation plat est disposé à plat sur une plaque conductrice de chaleur, caractérisé en ce que le dispositif comporte une plaque unique conductrice de chaleur (1), un revêtement calorifuge (10) sur la face du milieu de séparation (8) opposée à la plaque conductrice de chaleur (1), un ou plusieurs dispositifs de chauffage (4) réglables sur l'un des bords (2), et un ou plusieurs dispositifs de refroidissement (5) réglables sur le bord opposé (3) de la plaque conductrice de chaleur (1).

8. Dispositif selon la revendication 7, caractérisé en ce qu'on règle le dispositif de chauffage (4) ainsi que le dispositif de refroidissement (5) par thermostat, respectivement avec des bains de liquides dont la température est régulée de façon correspondante.

9. Dispositif selon la revendication 7 ou 8, caractérisé par un dispositif de chauffage (4) comportant un fil chauffant ou des éléments à effet Peltier.

10. Dispositif selon une des revendications 7 à 9, caractérisé en ce que les dispositifs de chauffage (4) situés sur le bord (2) et les dispositifs de refroidissement (5) situés sur le bord (3) comportent des blocs métalliques à double perforation.

11. Utilisation d'un dispositif selon une des revendications 7 à 10 pour la séparation de mélanges de substances dans lesquels au moins un composant subit une transformation thermique dans la plage de températures du gradient thermique.

12. Utilisation d'un dispositif selon la revendication 11, pour la détection et la différenciation de viroïdes, d'acides nucléiques viraux, d'ARN satellites, pour l'analyse de mutations dans des acides nucléiques, pour l'analyse de mutations dans des protéines et pour l'analyse de complexes protéine-acide nucléique.

Fig. 1

Fig. 2

Fig. 3